**Europäisches Patentamt**

**European Patent Office**

**Office européen des brevets**

(19)

(11) Publication number: **0 186 633**
**A2**

(12) # EUROPEAN PATENT APPLICATION

(21) Application number: **85830316.7**

(22) Date of filing: **24.12.85**

(51) Int. Cl.⁴: **B 29 C 45/20**

(30) Priority: **24.12.84 IT 2424184**

(43) Date of publication of application:
**02.07.86 Bulletin 86/27**

(84) Designated Contracting States:
**CH DE FR GB LI SE**

(71) Applicant: **RUTIL S.r.l.**
**Via Raffaello Sanzio**
**Lonate Ceppino(IT)**

(72) Inventor: **Coscia, Giovanni A.**
**Via Casluncio, 16**
**Varese(IT)**

(74) Representative: **Adorno, Silvano et al,**
**c/o SOCIETA' ITALIANA BREVETTI S.p.A. Via Carducci, 8**
**I-20123 Milano(IT)**

(54) **Improved mould and nozzle in an injection molding machine.**

(57) In an injection molding machine, particularly for molding rubber, a nozzle (20, 21) is caused to advance through the stationary upper mould (30) having an axial passage (40) with a frusto-conical mouth piece (42) adapted to be a sealing seat for an associate tapered portion (23) or "neck" of the nozzle body (20), the end portion (25) of which, beyond said neck zone (23), has such a length to prevent the nozzle end (26) from protruding to the outside of the lower or inner surface (39) of the mould (30). The nozzle (20, 21) is also preferably formed, at the inside of its body (20), with an outwardly flared portion (27) communicating axially with the injection tapered end (28). Additionally in a preferred embodiment said passage (40) in the upper mould (30) is slightly flared outwardly, and the end portion (25) of the nozzle body (20) is substantially cylindrical to have a better sealing in the neck zone (23). The mobile lower mould (30a) has, like in the known moulds, an undercut (44) at the zone corresponding to the nozzle end (26).

Fig. 2

"IMPROVED MOULD AND NOZZLE IN AN INJECTION MOLDING MACHINE"

The present invention relates to improvements in the mould and the nozzle of vertical injection molding machines or molding presses, particularly for molding rubber.

It is known, in the injection vertical machines, to inject into the mold the plasticized and suitably batched material through a nozzle which is lowered until its end rests onto a properly shaped area of the upper surface of the mould, more precisely the stationary upper half-mould, at the location of a through hole along which the material flows within the mould. This through hole is usually of frusto-conical shape, with a cross-section area increasing toward the lower surface of the mould, so that the so-called injection "plug" or "deadhead" can be easily ejected upon opening the mould, as it is held at the base by an undercut which is provided for this purpose in the lower half-mould and could be called "deadhead holder". As a matter of fact the injected material, at a pressure of about 2,000 atm (2026.5 bar), upon filling the mold cavity, flows back again thus forming the plug through the upper mould. When the material is one that solidifies promptly, such as plastics, or in those cases where the nozzle holds its position until the material is completely hardened, the flow-back cone stops only at the upper end of the through hole, where the reflux pressure is counterbalanced by the nozzle pressure. In these cases the mould is kept clean as the plug is integral with the molding product and subsequently will be removed.

Sometimes however it is required to move the nozzle away immediately after the injection, as it is the case in the multi-station machines for which the stay time at each station determines the machine efficiency and must be as short as possible in order to have the best utilization of the productive capacity afforded by the machine. In this case, particularly when the material is rubber with a rather slow solidification process, the flowing back material is not opposed by the nozzle and reaches the mouth zone of the frusto-conical through hole where the nozzle rests on the mould. The latter is hot and therefore the material vulcanizes and forms the so-called "plug head" or "burr" with consequent serious inconveniences.

In fact, as in a subsequent injection phase the nozzle is lowered again, it finds the rest surface occupied by said plug head and then either injects the same into the mould, thus causing a waste product to be made, or expands the plug head once or several times, finally causing the latter to penetrate partially in the mould and possibly obstruct the injection flow with very dangerous consequences, which anyone can foresee. This occurs because the deadhead or formed plug of solidified material flown back through the passage in the upper mould cannot merely slip off from the mould upon its opening, but it breaks as it is rigidly connected thereto by means of the above-mentioned burr or plug head which cannot pass through the hole mouth owing to its larger size.

Therefore it is the object of the present invention to provide, in a machine of the above-defined type, an improved mould and nozzle, such as to prevent the plug head formation, thus avoiding the dangerous consequences already described, even with machines having a plurality of injection stations for molding rubber. With these improvements a nozzle can be lifted immediately after the injection step without any drawback, so as to utilize the whole productive capacity of this type of machines.

This is obtained by providing a nozzle body having an end formed with a neck portion of frusto-conical shape for co-operating in a fluid-tight manner with an associate frusto-conical mouth of an axial through hole passing through the nozzle body having a size such as not to protrude beyond the lower surface of the mould when said two frusto-conical zones are in mutual contact.

According to a preferred embodiment, the tapered end of the nozzle is located slightly at the inside of the nozzle body and communicates with the outer mouth end through a co-axial length of outwardly flared conduit.

According to a further aspect of the invention, the final length of the nozzle body, past said neck zone, is substantially cylindrical whereas said passage within the mould, past the frusto-conical mouth which is sharply tapered to form a good seal around the nozzle neck, is slightly flared toward the inner region of the mould, thus leaving the necessary clearance for centering tolerance reasons and to give the material the possibility of flowing out to relieve its pressure.

It should be understood that the mobile half-mould will have, like in the prior art, an undercut in substantially coaxial alignment with the nozzle which, upon opening the mould, carries away with its movement the flashes formed both as a consequence of said flared portion of nozzle, substantially corresponding to the "plug" of prior art, and of said peripheral clearance between nozzle body and mould, all flashes being of upwardly decreasing cross-section so as to be able to slip off when the mould is opened, thus leaving the upper half-mould perfectly clean.

Additional objects, advantages and features of the present invention will be clear from the following detailed description of one embodiment thereof, given by way of non-limiting example with reference to the annexed drawings wherein:

FIGURE 1 diagrammatically shows a vertical cross-section view of a machine for injection molding with improved mould and nozzle according to the invention, with closed mold; and

FIGURE 2 shows the same view of Fig. 1, but without the whole upper portion, with open mould and lifted nozzle.

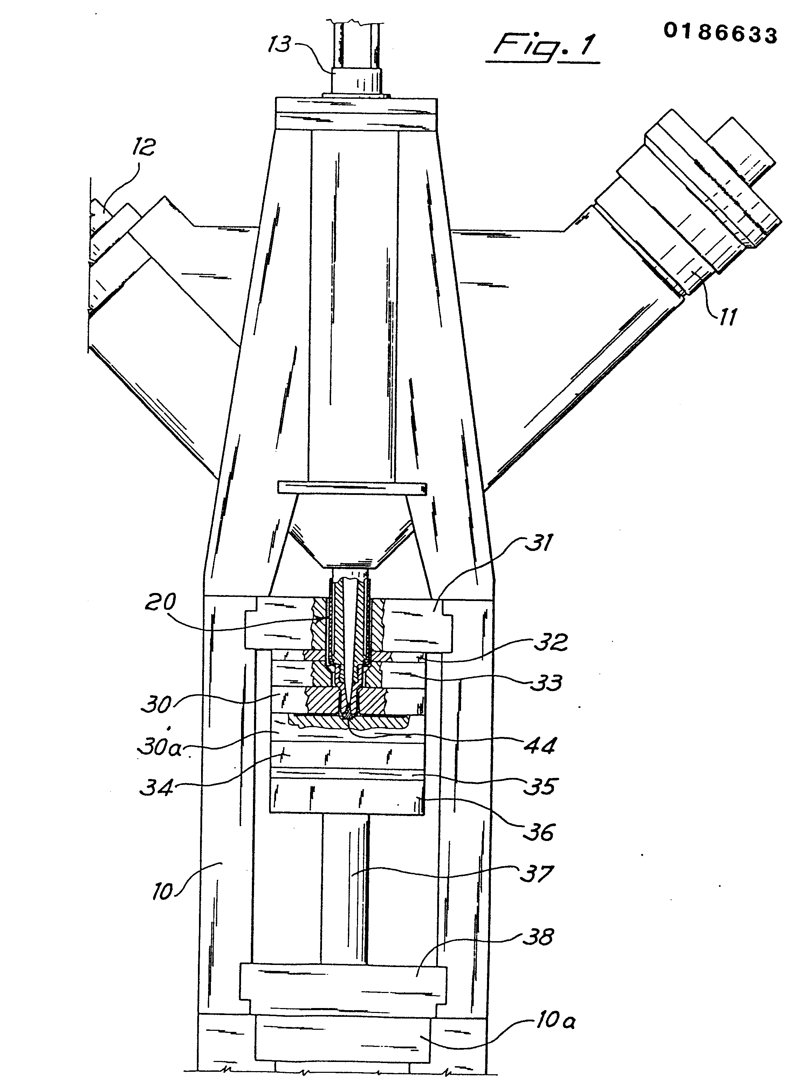

With reference to the drawings, in particular to Fig. 1, a vertical-type machine for the injection molding is shown, especially for molding rubber; which traditionally comprises a screw-feeding unit 11 for feeding the mix, an injection unit 12 and a driving unit 13 for actuation of a nozzle generally designated by its body 20. Innerly of the machine frame 10 and above the base 10a there are also mounted, in a known manner, the following elements considered in a downward direction: stationary block 31, insulating layer 32, heating plane 33, upper (stationary) 30 and lower (mobile) half-mould 30a, lower heating plane 34, lower insulating layer 35, movable block 36, cylindrical rod 37 and backing plate 38.

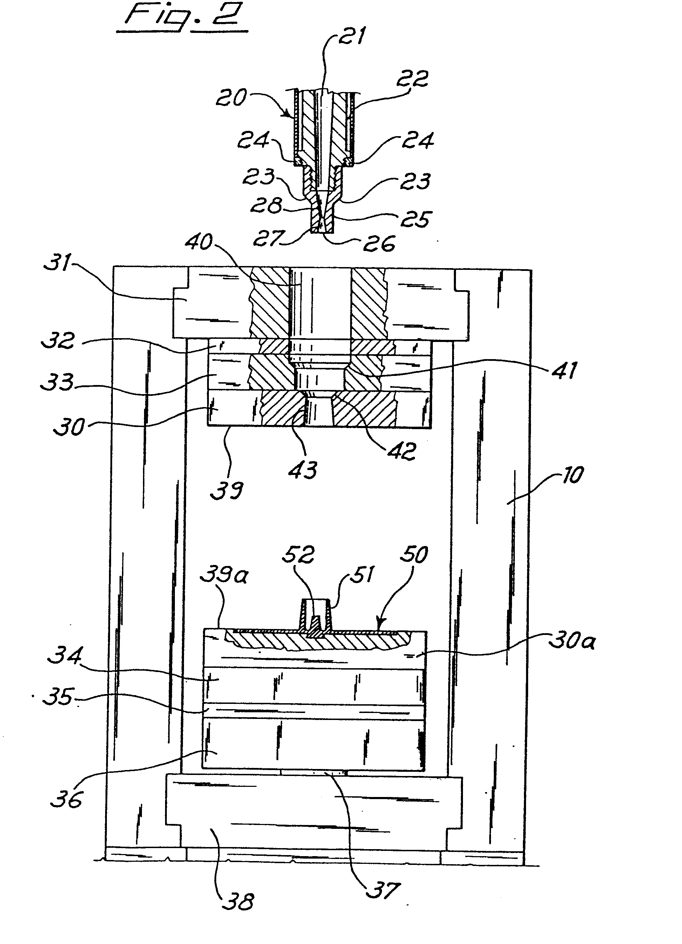

According to the invention and contrary to the prior art the nozzle 20 in its lowered position substantially passes across the whole thickness of the upper half-mould 30 through a passage 40 centrally provided in the stationary block 31, the insulating layer 32, the heating plane 33 and finally through the upper half-mould 30 itself, designed to house the end portion of the nozzle body 20. With particular reference to Fig. 2, the injection nozzle per se is designated 21, and 22 is a thermostatically heating chamber which surrounds nozzle 21 down to the location of a first abutment with gasket 24, which causes a cross-section reduction toward the end portion. At a position nearer to the end, a further cross-section reduction is provided by a frusto-conical portion or "neck" 23, after which a preferably cylindrical length 25 leads to the outlet mouth 26.

The cross-section of through hole 40 is such as to match with the nozzle body 20 when the latter is in its lowered position of injection. In particular the section reduction 41 corresponds to the abutment 24 and a tapered mouth 42 corresponds to the nozzle neck 23. The portion 25 will have such a length that the end 26 does not extend outwards from the lower surface 39 of the half-mould 30 when the tapered surfaces 23, 42 are in contact to each other, in other words the height of portion 25 will not be greater than the height of the portion of passage 40 designated 43 in Fig. 2, joining the frusto-conical mouth 42 with the lower surface of the stationary half-mould 30.

According to a first particular aspect of the invention, the tapered injection end 28 of the nozzle 21 opens into the inside of nozzle body 20 and is connected to the outlet end 26 thereof by means of a length of flared conduit 27, directly communicating with nozzle 21 and co-axial therewith.

According to another preferred aspect of the invention the portion 43 of through hole 40 has a slight outward inclination of the wall, having a frusto-conical shape with a very small angular amplitude, such as to determine at the lower surface of the half-mould 30 an annular clearance having a size between 0.3 to 1 mm.

The operation, as it appears from the drawings is the following. With closed mould and lowered nozzle, immediately after the injection of the material, occurring at high pressure (about 2,000 bar) through the injection end 28 of the nozzle, the flared portion of conduit 27 and the outlet 26, thus filling up all the thickly hatched region indicated in Fig. 1, the nozzle 21 can be immediately moved away without causing a "plug head" to be formed with all its negative consequences. As a matter of fact the flowing back material will be able to fill up, if necessary, the volume at the inside of an annular cylinder 51 (with tapered walls) formed by the clearance between the walls of portions 25 and 43, in addition to a hollow truncated cone 52 corresponding to passage 27, without however any influence on the upper half-mould which is kept clean. This is due to the fact that the undercur 44 formed, as is known, on the surface 39a of the lower half-mould 30a, when moving downwards holds tight and carries away with it, together with the so-called plug or "deadhead" 52, also the annular cylinder 51 and a possible flash at the inside of the lower mould which will then be trimmed in a known manner.

In this connection it should be appreciated that the preferred mutual arrangement of the portions 25 and 43 respectively pertaining to the nozzle and to the upper mould, gives rise to a tapered shape of the wall of the annular cylinder 51, what is helpful in detaching the same from the upper half-mould 30,as well as that the tapered shape of the central plug 52 assists the upward movement of the nozzle 21. The size of the end of nozzle body 20, which determines the diameter of the cylinder 51, is however such as to ensure a sufficient space within the latter to allow the material expanding in consequence of the nozzle lifting. Only by way of example one can adopt diameters of about 3-4 mm for the nozzle end 28, against diameters of about 15 mm for the outlet 26 from the nozzle body. As stated above, the thickness of the annular wall 51 gradually decreases from the base to the upper end, where is practically zero at the fluid-tight contact zone between nozzle neck 23 and mouth·42 into the passage 40.

CLAIMS

1. Improvements in the nozzle and mould of a vertical injection molding machine, with a vertically movable nozzle with respect to a stationary upper half-mould (30) and with a lower half-mould (30a) which is movable with respect to the stationary one, characterized by the fact that the injection nozzle (21) is formed within a nozzle body (20) having, towards its outlet free end (26), a tapered neck portion (23) to co-operate in a fluid-tight manner with an associate frusto-conical mouth (42) of an axial passage (40) through the half-mould (30), the end portion (25) of the nozzle body (20) having such a length that said outlet (26) does not protrude beyond the lower surface (39) of half-mould (30) when said two frusto-conical zones (23, 42) are in mutual contact to each other.

2. Improvements according to claim 1, characterized by said injection nozzle (21) having its tapered end (28) located at the inside of said body (20) and communicating with the outlet (26) through a coaxial length of an outwardly flared conduit (27).

3. Improvements according to claim 1 or 2, characterized by the fact that the final length (25) of the nozzle body (20), past said neck portion (23) is of substantially cylindrical, and said passage (40) through the half-mould (30), past said tapered mouth (42), is formed with a portion (43)opening the lower surface (39) with a slightly flared, frusto-conical shape of an angular amplitude which is sensibly smaller than and directed opposite to the tapered shape of portion (42).

4. Improvements according to anyone of the preceding claims, wherein the end (28) of nozzle (21) has its diameter of a size in the order of 3-4 mm and the diameter of outlet (26) has about 3-5 times this size.

5. Improvements according to claim 3, wherein the clearance between the outlet (26) of nozzle body (20) and the opening mouth of the end portion (43) of passage (40) onto the surface (39) corresponds to an annular ring having a wall thickness at its base of about 0.3-1 mm, gradually decreasing upwards until reaching substantially zero at the boundary between the portions (42, 43) of passage (40), when the nozzle (20) is completely housed in the half-mould (30) with a first abutment with gasket (24) and said neck portion (23) respectively engaging a first tapered portion (41) and said tapered mouth (42) of the inner passage (40).

6. Injection molding vertical machine, in particular for rubber molding, which comprises a support frame (10) and a base (10a) with a feeding unit (11) for the material to be molded, an injection unit (12) and a driving unit (13) for the vertical movement of a nozzle (21) integral with a nozzle body (20); and at the inside of said frame (10), integral therewith, a stationary block (31), an insulating layer (32), a heating plane (33) and an upper half-mould (30), being axially crossed by a through hole passage (40) for housing the nozzle body (20),and further comprising, all mounted on a piston-cylinder rod (37) movable with respect to a backing plate (38): a mobile block (36), an insulating layer (35), a lower heating plane (34) and a lower half-mould (30a) adapted to come at least partially in contact, through its upper surface (39a) with the lower surface (39) of upper half-mould (30), and being formed with a central undercut (44), characterized in that said passage (40) completely crosses also said upper half-mould (30) until opening onto its lower surface (39), and is shaped so as to match with the outer shape of said nozzle body (20) when this is at its lowest position, with a tapered mouth (42) of the passage (40) co-operating in a fluid-tight manner with a corresponding tapered neck portion (23) of the body (20), whereby the outlet end (26) of the latter does not protrude at the outside of said lower surface (39).

*Fig.1*

0186633

0186633

Fig. 2